# EUROPÄISCHE PATENTSCHRIFT

(11) **EP 2 789 145 B1**
(45) Veröffentlichungstag und Bekanntmachung des Hinweises auf die Patenterteilung: **29.08.2018**
(21) Anmeldenummer: 12797810.4
(22) Anmeldetag: 22.11.2012
(51) Int. Cl.: H04L 29/06

(54) **VORRICHTUNG ZUR BEDIENUNG VON MINDESTENS EINEM FELDGERÄT DER AUTOMATISIERUNGSTECHNIK**
DEVICE FOR OPERATING AT LEAST ONE AUTOMATION TECHNOLOGY FIELD DEVICE
DISPOSITIF DE COMMANDE D'AU MOINS UN APPAREIL DE TERRAIN UTILISÉ DANS LE DOMAINE DE L'AUTOMATISATION

(30) Priorität: 06.12.2011 DE 102011087826
(43) Veröffentlichungstag der Anmeldung: 15.10.2014
(73) Patentinhaber: Endress+Hauser Process Solutions AG, 4153 Reinach (CH)
(72) Erfinder: HÄHNICHE, Jörg, 79189 Bad Krozingen (DE); VETTER, Immanuel, 76547 Sinzheim (DE); MESSER, Julien, F-68960 Grentzingen (FR); BIRGEL, Frank, 79650 Schopfheim (DE); HORN, Tobias, DE-71155 Altdorf (DE)
(74) Vertreter: Andres, Angelika Maria
(86) Internationale Anmeldenummer: PCT/EP2012/073309
(87) Internationale Veröffentlichungsnummer: WO 2013/083410

(56) Entgegenhaltungen:
- DE-A1-102009 054 901
- US-A1- 2011 125 295

## Beschreibung

Die Erfindung betrifft eine Vorrichtung zur Bedienung von mindestens einem Feldgerät der Automatisierungstechnik mittels einer mit dem Feldgerät verbundenen oder verbindbaren Bedieneinheit.

In der Automatisierungstechnik, insbesondere in der Prozess- ebenso wie in der Fabrikautomatisierungstechnik, werden vielfach Feldgeräte eingesetzt, die zur Erfassung und/oder Beeinflussung von physikalischen, chemischen oder biologischen Prozessgrößen dienen. Zur Erfassung von Prozessgrößen dienen Messgeräte, wie beispielsweise Füllstandsmessgeräte, Durchflussmessgeräte, Druck- und Temperaturmessgeräte, pH-Messgeräte, Leitfähigkeitsmessgeräte, usw., welche die entsprechenden Prozessgrößen Füllstand, Durchfluss, Druck, Temperatur, pH-Wert bzw. Leitfähigkeit erfassen. Zur Beeinflussung der Prozessgrößen werden Aktoren verwendet, wie Ventile oder Pumpen, über die z.B. der Durchfluss einer Flüssigkeit in einer Rohrleitung oder der Füllstand eines Mediums in einem Behälter geändert wird. Unter dem in Verbindung mit der Erfindung verwendeten Begriff 'Feldgeräte' sind somit alle Typen von Messgeräten und Aktoren zu subsumieren.

Als Feldgeräte werden darüber hinaus in Zusammenhang mit der Erfindung auch alle Geräte bezeichnet, die prozessnah eingesetzt werden und die prozessrelevante Informationen liefern oder verarbeiten. Neben den zuvor genannten Messgeräten/Sensoren und Aktoren werden als Feldgeräte allgemein auch solche Einheiten bezeichnet, die direkt an einem Feldbus angeschlossen sind und zur Kommunikation mit der übergeordneten Einheit dienen, wie z.B. Remote I/Os, Gateways, Linking Devices und Wireless Adapter bzw. Funkadapter. Eine Vielzahl solcher Feldgeräte wird von der Endress + Hauser-Gruppe hergestellt und vertrieben.

In modernen Industrieanlagen erfolgt die Kommunikation zwischen zumindest einer übergeordneten Steuereinheit und den Feldgeräten in der Regel über ein Bussystem, wie beispielsweise Profibus® PA, Foundation Fieldbus® oder HART®. Die Bussysteme können sowohl drahtgebunden als auch drahtlos ausgestaltet sein. Die übergeordnete Steuereinheit dient zur Prozesssteuerung, zur Prozessvisualisierung, zur Prozessüberwachung und/oder zur Inbetriebnahme und Bedienung der Feldgeräte und wird auch als Konfigurier-/Managementsystem bezeichnet.

Die Integration von Feldgeräten in Konfigurations- oder Managementsysteme kann über Gerätebeschreibungen erfolgen, die dafür sorgen, dass die übergeordneten Steuereinheiten bzw. Bedieneinheiten die von den Feldgeräten gelieferten Daten erkennen und interpretieren können. Bereit gestellt werden die Gerätebeschreibungen für jeden Feldgerätetyp, ggf. für jeden Feldgerätetyp in unterschiedlichen Applikationen, in der Regel von dem jeweiligen Gerätehersteller. Damit die Feldgeräte in unterschiedliche Feldbussysteme integriert werden können, müssen unterschiedliche Gerätebeschreibungen für die unterschiedlichen Feldbussysteme erstellt werden. So gibt es - um nur einige Beispiele zu nennen - HART-, Fieldbus Foundation- und Profibus-Gerätebeschreibungen. Die Anzahl der Gerätebeschreibungen ist sehr groß, - entspricht sie doch der großen Zahl der unterschiedlichen Feldgeräte bzw. Feldgerätetypen in den unterschiedlichen Applikationen und Bussystemen.

Zwecks Schaffung einer einheitlichen Beschreibungssprache für die Feldgeräte, haben die Fieldbus Foundation (FF), die HART Communication Foundation (HCF) und die Profibus Nutzerorganisation (PNO) eine einheitliche elektronische Gerätebeschreibungssprache (Electronic Device Description Language EDDL) erstellt. Die EDDL bzw. die entsprechende Electronic Device Description EDD ist in der Norm IEC 61804-2 definiert.

Neben den zuvor beschriebenen Gerätebeschreibungen werden sog. Device Type Manager (DTM) bzw. Gerätemanager oder Gerätetreiber eingesetzt, die als Laufzeitumgebung eine geeignete Rahmenapplikation, insbesondere einen FDT-Frame, benötigen. DTMs dienen zur vollumfänglichen Bedienung der Feldgeräte und entsprechen der FDT - Field Device Tool - Spezifikation.

Die als Industriestandard geltende FDT-Spezifikation entspricht einer Schnittstellenspezifikation und wurde von der PNO - Profibus Nutzer Organisation - in Zusammenarbeit mit dem ZVEI - Zentralverband Elektrotechnik- und Elektroindustrie - entwickelt. Die jeweils aktuelle FDT-Spezifikation ist über den ZVEI bzw. die PNO bzw. die FDT-Group erhältlich.

Die FDT-Technologie eröffnet die Möglichkeit zur universellen Bedienung von Feldgeräten unterschiedlicher Hersteller über Gerätetreiber, die die Feldgeräte vollumfänglich beschreiben und in einer FDT-Rahmenapplikation (FDT Frame) lauffähig sind. Unter Bedienen der Feldgeräte ist ganz allgemein die Parametrierung oder die Konfiguration der Feldgeräte zu verstehen, ebenso wie die Durchführung einer Diagnose an einem der Feldgeräte oder die Statusabfrage. Im einfachsten Fall ist unter das Bedienen des Feldgeräts die Darstellung von Information über das Feldgerät auf einem Display zu verstehen.

Da für jeden Feldgerätetyp ein entsprechender feldgerätespezifischer Gerätetreiber DTM (Device Typ Manager) bzw. eine entsprechende feldgerätespezifischen Gerätebeschreibung DD (Device Description) erforderlich ist, ist die Anzahl der erforderlichen feldgerätetypspezifischen Beschreibungen sehr groß. Man spricht in diesem Zusammenhang von einer Gerätetreiber/Gerätebeschreibungs-Bibliothek. Über einen installierten Setup der Bibliothek ist es einem Kunden möglich, Feldgeräte unterschiedlicher Hersteller universell zu bedienen.

Die bekannte Lösung erweist sich in den folgenden Punkten als nachteilig:
- Es gibt eine immer direkte Abhängigkeit zwischen dem Gerätetyp und dem Gerätetreiber bzw. der Gerätebeschreibung;
- Zwecks Bedienung des Feldgeräts muss eine spezifische Zuordnung des Gerätetreibers zu dem Feldgerät durchgeführt werden;
- Um den Host, sprich die Bedieneinheit, bei einem erforderlichen Update auf dem aktuellen Stand zu halten, muss ein Update der Gerätetreiber bzw. der Gerätebeschreibungen durchgeführt werden.
- Sowohl die Neu-Installation als auch die Aktualisierung bereits installierter Gerätetreiber bzw. Gerätebeschreibungen ist zeitaufwändig.

Darüber hinaus ist es, bspw aus der DE 10 2009 054901 A1 oder auch der US 2011/125295 A1 auch bekannt geworden, in ein Feldgerät einen WebServer zu integrieren, über den z.B. eine Parametrierung/eine Konfiguration des Feldgeräts oder eine Diagnose an dem Feldgerät durchgeführt werden kann. Je nach verfügbarem Speicherplatz im Feldgerät wird diese Funktion mehr oder weniger gut unterstützt. Ein Vorteil eines WebServers im Feldgerät ist darin zu sehen, dass die Installation und das Updaten der Gerätetreiber bzw. der Gerätebeschreibungen auf dem Host, sprich der Bedieneinheit, entfallen kann, da auf Standard-Betriebsmittel, also insbesondere einen WebBrowser, zurückgegriffen wird.

Jedoch hat die Lösung mit WebServer im Feldgerät auch weniger vorteilhafte Aspekte:
- Nicht alle Feldgeräte unterstützen einen WebServer, da entweder kein Speicherplatz oder nicht genügend Speicherplatz zur Verfügung steht;
- Auch ist der Grad der Unterstützung des WebServers unterschiedlich, insbesondere wenn der zur Verfügung stehende Speicherplatz begrenzt ist;
- Es gibt eine Abhängigkeit zwischen dem WebBrowser bzw. dem WebServer und dem unterstützten HTML Standard. Probleme treten auf, wenn der WebServer im Feldgerät nicht kompatibel zu dem WebBrowser ist bzw. wenn der WebBrowser nicht von dem WebServer unterstützt wird;
- Eine Bearbeitung der Gerätedaten ohne den Zugriff auf ein existierendes Gerät ist nicht möglich, da der dazu benötigte Webserver von einem passenden Gerät zur Verfügung gestellt werden muss. Somit werden einige Anwendungsszenarien vor allem im Engineeringbereich nicht unterstützt.

Der Erfindung liegt die Aufgabe zugrunde, eine Vorrichtung zur Verfügung zu stellen, die die Bedienung von Feldgeräten der Automatisierungstechnik mittels einer Bedieneinheit vereinfacht.

Die Aufgabe wird dadurch gelöst, dass der Bedieneinheit ein außerhalb des Feldgeräts angeordneter Server zugeordnet ist, dass der Server zumindest eine feldgerätetypspezifische, dem jeweiligen Feldgerät zugeordnete Webseite (oder allgemeiner: einen feldgerätespezifischen Inhalt) dynamisch erzeugt, und dass der Bedieneinheit ein Bedienprogramm zugeordnet ist, welches einen Browser zur Verfügung stellt, um die feldgerätetypspezifische Webseite bzw. den feldgerätespezifischen Inhalt auf einer Anzeigeeinheit verfügbar zu machen. Weiterhin wird über das Bedienprogramm eine Kommunikationsanbindung zwischen dem Server und dem Feldgerät zwecks Bedienung des Feldgeräts angeboten bzw. direkt hergestellt. Bevorzugt handelt es sich bei der Bedieneinheit um ein mobiles Bediengerät, z.B. ein Smartphone, einen Laptop, ein PDA oder ein sonstiges Handbediengerät. Was unter dem Begriff "Feldgerät" zu verstehen ist, wurde in der Beschreibungseinleitung bereits ausführlich dargelegt.

Gemäß einer bevorzugten Ausgestaltung der erfindungsgemäßen Vorrichtung ist das Bedienprogramm, das den WebBrowser zur Verfügung stellt, als Gerätemanager in einer geeigneten Rahmenapplikation implementiert. Weiterhin ist ein Kommunikationstreiber vorgesehen, der die Kommunikationsanbindung zu dem jeweiligen Feldgerät herstellt. Die Anbindung erfolgt entweder über eine Service-Schnittstelle oder über eine Feldbusschnittstelle. Bei dem Gerätetreiber handelt es sich bevorzugt um einen Gerätetreiber FDT-DTM, der entsprechend dem FDT Standard gefertigt ist. Bei der Rahmenapplikation handelt es in diesem Fall um einen FDT Frame, in dem die FDT Gerätetreiber lauffähig sind.

Eine vorteilhafte Ausgestaltung der erfindungsgemäßen Vorrichtung sieht vor, dass das Bedienprogramm offline arbeitet und so ausgestaltet ist, dass auf ein virtuelles, also nicht angeschlossenes Feldgerät abgestimmte, das Feldgerät in der vorgesehenen Applikation vollständig beschreibende, instanzspezifische Datensätze im Webserver erzeugt werden.

Weiterhin ist das Bedienprogramm so ausgestaltet, dass die instanzspezifischen Datensätze vom Webserver ausgelesen und wieder zurück geschrieben werden können, ohne dass eine direkte Verbindung mit einem entsprechenden Feldgerät existiert.

Alternativ wird vorgeschlagen, dass das Bedienprogramm online arbeitet und so ausgestaltet ist, dass es bei angeschlossenem Feldgerät den Webserver auffordert, die ggf. zuvor offline erzeugten Datensätze zumindest teilweise mit den im Feldgerät vorhandenen Datensätzen durch Lesen vom oder Schreiben zum Feldgerät abzugleichen. Hierzu stellt das Bedienprogramm die erforderliche Kommunikationsanbindung bereit. Darüber hinaus ist in diesem Zusammenhang vorgesehen, dass das Bedienprogramm so ausgestaltet ist, dass der Webserver bei angeschlossenem Feldgerät über die angebotene Kommunikationsanbindung mit dem Feldgerät kommuniziert, feldgerätespezifische Information in der zumindest einen Webseite zur Anzeige bringt und eine Bedienung des Feldgeräts ermöglicht.

Bevorzugt erfolgt die Kommunikation zwischen der Bedieneinheit und dem Server über eine Intranet- und/oder eine Internetverbindung.

Die Vorteile der Erfindung gegenüber der Lösung mit im Feldgerät integriertem WebServer sind die folgenden:
- Die feldgerätespezifische Gerätebeschreibung ist nicht auf dem Host, hier also dem Bediengerät, installiert, sondern wird auf Anfrage hin - "also on demand" - direkt von einem angeschlossenen WebServer oder über Internet/Intranet von einem WebServer "in the Cloud" zur Verfügung gestellt.
- Die HTML Seiten werden nicht nur von dem Feldgerät selbst, sondern auch und ergänzend von einem dezentral oder lokal angeordneten WebServer mit Standard Internet Diensten zur Verfügung gestellt.
- Der WebBrowser ist - wie bei der bevorzugten Ausgestaltung beschrieben - auf dem Bediengerät in einen Gerätetreiber und in eine für Gerätetreiber ausgelegte Rahmenapplikation, z.B. den FDT Frame, eingebettet.
- Es wird lediglich noch ein Standard-Gerätetreiber DTM benötigt, in welchen der WebBrowser eingebettet ist.
- Mittels des Kommunikationstreibers wird die Kommunikation mit dem Feldgerät ermöglicht. Im online-Betrieb kann entweder mittels Webserver im Feldgerät oder mittels externem Webserver direkt auf die entsprechenden Informationen, insbesondere die Parameter, die Kalibrierdaten, die Diagnosewerte, usw. in dem Feldgerät zugegriffen werden.

Online heißt im Zusammenhang mit der Erfindung, dass die feldgerätespezifischen Datensätze des Feldgeräts bereitgestellt werden, sobald die Verbindung zwischen der Bedieneinheit und dem Feldgerät hergestellt ist. Anschließend können die bearbeiteten, auf die jeweilige Anwendung angepassten instanzspezifischen Datensätze, bei denen es sich insbesondere um Parameterwerte, Diagnosewerte, Statuswerte, etc. handelt, lokal oder dezentral in einem Speicherbereich abgelegt werden.

Im Gegensatz hierzu bedeutet offline-Betrieb, dass die feldgerätetypspezifischen Datensätze entweder lokal oder dezentral bereitgestellt werden, offline bearbeitet -und somit instanzspezifische, also auf die jeweilige Applikation bzw. Anwendung abgestellte Datensätze erzeugt werden - und anschließend als instanzspezifische Datensätze abgespeichert werden.

Der Bezug zwischen den Parametern, die im Feldgerät gespeichert sind und der HTML Seite wird durch das Gerätemodell des jeweiligen Feldgerätetyps im Webserver bestimmt.

Es werden nachfolgend noch einmal die Vorteile der Erfindung zusammengefasst:
- Feldgeräte, die keinen WebServer unterstützen - sog. Legacy Geräte - können mittels des WebBrowsers bedient, also insbesondere parametriert oder konfiguriert werden. Ebenso ist eine Diagnose durchführbar.
- Es gibt keine Abhängigkeit zwischen dem Feldgerät und dem WebBrowser bzw. der HTML Technologie.
- In den Feldgeräten werden keine zusätzlichen Ressourcen (insbesondere Speicherressourcen) benötigt. Hierdurch ist es möglich, auch bereits in einer Automatisierungsanlage installierte Feldgeräte erfindungsgemäß zu bedienen. Gleiches gilt für Feldgeräte, die bereits mit einem WebServer ausgestattet sind.
- Die Installation der Bibliothek von Gerätetreibern oder Gerätebeschreibungen auf der Bedieneinheit entfällt. Bisher mussten diese aufwändig auf dem Host installiert werden, um je nach Bedarf die entsprechenden feldgerätespezifischen Geräte Treiber bzw. (d.h. oder, und, und/oder) Gerätebeschreibungen zur Bedienung der Feldgeräte verfügbar zu haben.
- Updates von Gerätebeschreibungen bzw. Gerätetreibern werden nur auf dem WebServer durchgeführt. Wird mit einem dezentralen, über Internet zugänglichen WebServer gearbeitet, so stellt dieser automatisch immer die aktuell gültigen HTML Seiten für die zu bedienenden Feldgeräten zur Verfügung.
- Ein zentraler Update Server kann eingesetzt werden, um zu jedem gewünschten Zeitpunkt verteilte WebServer zu aktualisieren und beispielsweise die Bibliothek der Gerätebeschreibungen zu pflegen.

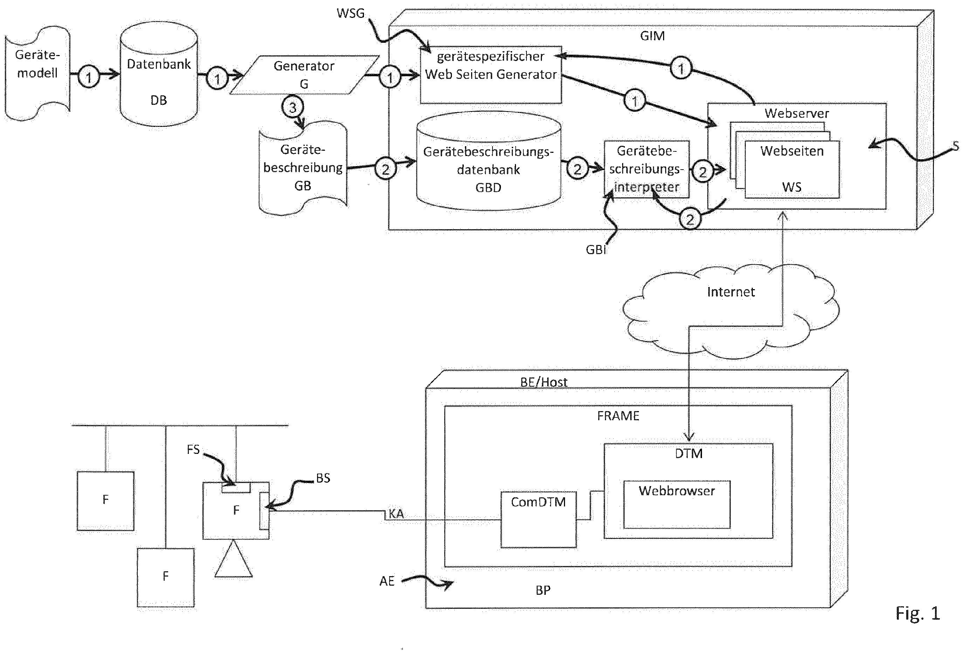

Die Erfindung wird anhand der Figur Fig. 1 näher erläutert. Fig. 1 zeigt eine schematische Darstellung der erfindungsgemäßen Vorrichtung zur Bedienung von mindestens einem Feldgerät F der Automatisierungstechnik. Feldgeräte wurden bereits in der Beschreibungseinleitung vorgestellt. Das Feldgerät F ist beispielsweise in einer Automatisierungsanlage angeordnet. Im gezeigten Fall weist das Feldgerät F eine Feldbus-Schnittstelle FS und eine Service-Schnittstelle BS auf. Über die Service-Schnittstelle BS ist das Feldgerät F im gezeigten Beispiel mit einer Bedieneinheit BE verbunden; das Feldgerät F ist also online. Die Kommunikation erfolgt entweder über geeignete Verbindungskabel oder über Funk. Über die Feldbusschnittstelle FS ist das Feldgerät F z.B. an einen der in der Automatisierungstechnik gebräuchlichen Feldbusse gekoppelt und kommuniziert über eines der Kommunikationsprotokolle, die in der Einleitung bereits genannt wurden, mit einer nicht gesondert dargestellten Steuer-/Bedieneinheit.

Die Bedieneinheit BE ist mit einem außerhalb des Feldgeräts F angeordneter Server S verbunden. Im gezeigten Fall ist der Server S über Internet erreichbar. Vorgesehen ist jedoch auch eine direkte Verbindung zwischen Feldgerät F und Server S. Der Server S stellt auf eine entsprechende Anfrage hin zumindest eine dem jeweiligen Feldgerät F zugehörige feldgerätetypspezifische Information auf einer Webseite WS zur Verfügung. Diese Information entspricht z.B. zumindest einem Teil der Parameter, die das Feldgerät F und seine Funktionalität beschreiben. Die Information kann jedoch auch Status- oder Diagnoseinformation sein.

Erfindungsgemäß stellt das der Bedieneinheit BE zugeordnete Bedienprogramm BP einen Browser B zur Verfügung. Dieser macht die feldgerätetypspezifischen Webseiten WS auf einer Anzeigeeinheit AE verfügbar. Weiterhin liefert die Bedieneinheit BE eine Kommunikationsanbindung KA zwischen dem Server S und dem Feldgerät F. Über diese Kommunikationsanbindung KA erfolgt die Bedienung des Feldgeräts F.

Im linken oberen Bereich von Fig. 1 sind drei unterschiedliche Fälle schematisch dargestellt, wie die von einem Server GIM - Geräte-Integrations-Manager - bereitgestellten WebSeiten WS beispielhaft erzeugt werden können.
1. In einer Datenbank DB werden zu den einzelnen Feldgeräten F verfügbare Informationen gesammelt. Bei den Informationen handelt es sich um statische Informationen zu den Feldgeräten F, wie Texte, ggf. in unterschiedlichen Sprachen, aber auch komplexe Gerätemodelle mit Algorithmen bzw. die Business Logic des Feldgeräts F, die die wechselseitigen Abhängigkeiten der einzelnen das Feldgerät F beschreibenden Parameter berücksichtigt, sowie gerätetypspezifische Implementierungsinformation. Über entsprechende Generatoren G werden auf der Basis der in der Datenbank DB gespeicherten Informationen zu den einzelnen Feldgeräten F feldgerätespezifische Webseiten Generatoren WSG erstellt. Der einem Feldgerät F zugeordnete feldgerätespezifische Webseiten Generator WSG wird vom WebServer S genutzt um die Webseiten WS für die Bedienung zu generieren.
2. Eine Gerätebeschreibung GB, bei der es sich z.B. um die bereits zuvor beschriebene Gerätebeschreibung DD (Device Description) handelt, wird in die Gerätebeschreibungsdatenbank GBD des Servers GIM geladen. Der Gerätebeschreibungs-Interpreter GBI wird vom Webserver S genutzt um feldgerätespezifische Webseiten WS für das Feldgerät F zu erzeugen.
3. Das Gerätemodell wird innerhalb einer Datenbank DB gespeichert. Statt mit dem Generator G Webseitengeneratoren WSG zu erzeugen, wird hier eine Gerätebeschreibung GB erstellt, die anschließend der Interpreter GBI nutzt, um für den WebServer S Webseiten WS zu erzeugen.

Die Auswahl eines Feldgeräts F erfolgt jeweils über eine eindeutige Gerätekennung. Je nach Anwendungsfall handelt es sich beispielsweise um die Seriennummer, den Geräte-Tag oder auch den Gerätetyp.

Nicht dargestellt in Fig. 1 ist der Fall, dass das Feldgerät F einen zusätzlichen eigenen WebServer beinhalten kann. Dieser Webserver enthält im Wesentlichen lediglich die Komponenten, die zur Darstellung der dem Feldgerät F entsprechenden Webseiten benötigt werden. Die Erzeugung der Webseiten WS erfolgt mit den für den WebServer S im Server GIM beschriebenen Mitteln. Der Zugriff auf die Webseiten erfolgt über die Kommunikationsanbindung KA und z.B. die Service-Schnittstelle BS.

## Patentansprüche

1. Vorrichtung zur Bedienung von mindestens einem Feldgerät (F) der Automatisierungstechnik mittels einer mit dem Feldgerät (F) verbundenen oder verbindbaren Bedieneinheit (BE), wobei der Bedieneinheit (BE) ein Server (S) zugeordnet ist, der feldgerätetypspezifische den jeweiligen Feldgeräten (F) zugeordnete Webseiten (WS) zur Verfügung stellt, wobei der Bedieneinheit (BE) ein Bedienprogramm (BP) zugeordnet ist, welches einen Browser (B) zur Verfügung stellt, um die feldgerätetypspezifischen Webseiten (WS) auf einer Anzeigeeinheit verfügbar zu machen,
**dadurch gekennzeichnet, dass**
der Server (S) außerhalb des Feldgeräts (F) angeordnet ist und dass der Browser eine Kommunikationsanbindung (KA) zwischen dem Server (S) und dem Feldgerät (F) zwecks Bedienung des Feldgeräts (F) herstellt.

2. Vorrichtung nach Anspruch 1,
wobei das Bedienprogramm (BP), das den WebBrowser (B) zur Verfügung stellt, als Gerätemanager (DTM) in einer Rahmenapplikation (FRAME), insbesondere einer FDT-Rahmenapplikation, implementiert ist und wobei ein Kommunikationstreiber (ComDTM) vorgesehen ist, der die Kommunikations-anbindung (KA) zu dem jeweiligen Feldgerät (F) herstellt.

3. Vorrichtung nach Anspruch 1 oder 2,
wobei das Bedienprogramm (BP) offline arbeitet und so ausgestaltet ist, dass zumindest ein auf ein virtuelles Feldgerät (F) abgestimmter das Feldgerät in der vorgesehenen Applikation vollständig beschreibender instanzspezifischer Datensatz im Webserver (S) erzeugt, bearbeitet, vom Webserver (S) ausgelesen und wieder zurück geschrieben wird, ohne dass eine direkte Verbindung mit einem entsprechenden Feldgerät (F) existiert.

4. Vorrichtung nach Anspruch 1, 2 oder 3,
wobei das Bedienprogramm (BP) online arbeitet und so ausgestaltet ist, dass es bei angeschlossenem Feldgerät (F) den Webserver (S) auffordert, die offline erzeugten Datensätze zumindest teilweise mit dem Feldgerät (F) über die durch das Bedienprogramm (BP) zur Verfügung gestellte Kommunikationsanbindung (KA) durch Lesen der Datensätze vom oder durch Schreiben der Datensätze zum Feldgerät (F) abzugleichen.

5. Vorrichtung nach Anspruch 1,
wobei das Bedienprogramm (BP) so ausgestaltet ist, dass der Webserver (S) bei angeschlossenem Feldgerät (F) über die angebotene Kommunikations-anbindung (KA) mit dem Feldgerät kommuniziert und feldgerätespezifische Information in den Webseiten (WS) zur Anzeige bringt.

6. Vorrichtung nach einem oder mehreren der vorhergehenden Ansprüche,
wobei die Bedieneinheit (BE) und der Server (S) über eine Intranet- und/oder eine Internetverbindung miteinander kommunizieren.

7. Vorrichtung nach einem oder mehreren der Ansprüche 1 bis 6,
wobei es sich bei der Bedieneinheit (BE) um ein mobiles Bediengerät handelt.

## Claims

1. Apparatus for the operation of at least one field device (F) used in automation engineering using a control unit (BE) that is connected to or connectable to the field device (F), wherein the control unit (BE) is assigned a server (S) which makes available field device type-specific web pages (WS) that are assigned to the individual field devices (F), wherein the control unit (BE) is assigned an operating program (BP), which makes a browser (B) available in order to make the field device type-specific web pages (WS) available on a display unit,
**characterized in that**
the server (S) is arranged outside the field device (F) and **in that** the browser establishes a communication connection (KA) between the server (S) and the field device (F) for the purpose of operating the field device (F).

2. Apparatus as claimed in Claim 1,
wherein the operating program (BP), which makes the web browser (B) available, is implemented as a device type manager (DTM) in a frame application (FRAME), particularly an FDT frame application, and wherein a communication driver (Com DTM) is provided which establishes the communication connection (KA) with the particular field device (F).

3. Apparatus as claimed in Claim 1 or 2,
wherein the operating program (BP) works offline and is designed in such a way that at least one instance-specific data record is generated in the web server (S), said data record being adapted to a virtual field device (F) and fully describing the field device in the application provided, is processed, is read out by the web server (S) and written back again without there being a direct connection with a corresponding field device (F).

4. Apparatus as claimed in Claim 1, 2 or 3,
wherein the operating program (BP) works online and is designed in such a way that, when the field device (F) is connected, it prompts the web server (S) to at least partially compare the data records generated offline with the field device (F) via the communication connection (KA) provided by the operating program (BP) by reading the data records from the field device (F) or by writing the data records to the field device (F).

5. Apparatus as claimed in Claim 1,
wherein the operating program (BP) is designed in such a way that, when the field device is connected (F), the web server (S) communicates with the field device via the communication connection (KA) provided and causes field device-specific information to be displayed on the web pages (WS).

6. Apparatus as claimed in one or more of the previous claims,
wherein the control unit (BE) and the server (S) communicate with one another via an intranet connection and/or via an internet connection.

7. Apparatus as claimed in one or more of the Claims 1 to 6,
wherein the control unit (BE) is a mobile control unit.

## Revendications

1. Dispositif destiné à la commande d'au moins un appareil de terrain (F) de la technique d'automatisation au moyen d'une unité de commande (BE) reliée ou pouvant être reliée avec l'appareil de terrain (F), l'unité de commande (BE) se voyant attribuer un serveur (S) qui met à disposition des pages Web spécifiques aux types d'appareil de terrain, attribuées aux différents appareils de terrain (F), l'unité de commande (BE) se voyant attribuer un programme de commande (BP), lequel met à disposition un navigateur (B) afin de rendre disponible les pages Web (WS) spécifiques aux appareils de terrain sur une unité d'affichage,
**caractérisé**
**en ce que** le serveur (S) est disposé en dehors de l'appareil de terrain (F) et **en ce que** le navigateur établit une liaison de communication (KA) entre le serveur (S) et l'appareil de terrain (F) à des fins de commande de l'appareil de terrain (F).

2. Dispositif selon la revendication 1,
pour lequel le programme de commande (BP), qui met à disposition le navigateur Web (B), est implémenté en tant que gestionnaire d'appareils (DTM) dans une application cadre (FRAME), notamment une application cadre FDT, et pour lequel est prévu un pilote de communication (Com DTM), qui établit la liaison de communication (KA) avec l'appareil de terrain (F) respectif.

3. Dispositif selon la revendication 1 ou 2,
pour lequel le programme de commande (BP) fonctionne hors ligne et est conçu de telle sorte à générer dans le serveur Web (S) au moins un bloc de données spécifique à l'instance, décrivant intégralement l'appareil de terrain dans l'application prévue, adapté à un appareil de terrain (F) virtuel, à le traiter, le lire à partir du serveur Web (S) et à le réécrire, sans qu'il existe une liaison directe avec un appareil de terrain (F) correspondant.

4. Dispositif selon la revendication 1, 2 ou 3,
pour lequel le programme de commande (BP) fonctionne en ligne et est conçu de telle sorte, lorsque l'appareil de terrain (F) est raccordé, à demander au serveur Web (S) de comparer les blocs de données générés hors ligne au moins partiellement avec l'appareil de terrain (F) via la liaison de communication (KA) mise à disposition par le programme de commande (BP) par la lecture des blocs de données à partir de l'appareil de terrain (F) ou par l'écriture des blocs de données vers l'appareil de terrain (F).

5. Dispositif selon la revendication 1,
pour lequel le programme de commande (BP) est conçu de telle sorte que le serveur Web (S) communique, lorsque l'appareil de terrain (F) est raccordé, avec l'appareil de terrain via la liaison de communication (KA) proposée, et affiche les informations spécifiques à l'appareil de terrain dans les pages Web (WS).

6. Dispositif selon l'une ou plusieurs des revendications précédentes,
pour lequel l'unité de commande (BE) et le serveur (S) communiquent entre eux via une liaison Intranet et/ou Internet.

7. Dispositif selon l'une ou plusieurs des revendications 1 à 6,
pour lequel il s'agit, concernant l'unité de commande (BE), d'un appareil de commande mobile.
